# EUROPÄISCHE PATENTANMELDUNG

(11) **EP 2 777 977 A1**
(43) Veröffentlichungstag der Anmeldung: **17.09.2014**
(21) Anmeldenummer: 14154589.7
(22) Anmeldetag: 11.02.2014
(51) Int. Cl.: B60L 11/18, H01M 2/34, H02J 7/00

(54) **Verfahren und Vorrichtung zur Erhöhung der Sicherung beim Gebrauch von Batteriemodulen**

(30) Priorität: 15.03.2013 DE 102013204518
(71) Anmelder: ROBERT BOSCH GMBH, 70442 Stuttgart (DE); Samsung SDI Co., Ltd., Yongin-si Gyeonggi-do 446-577 (KR)
(72) Erfinder: Fink, Holger, 70567 Stuttgart (DE)
(74) Vertreter: Bee, Joachim

(57) **Zusammenfassung**

Die Erfindung geht aus von einem Verfahren zur Herbeiführung eines sicheren Zustands eines Batteriemoduls eines Fahrzeugs, wobei der aktuelle Zustand des Batteriemoduls fortlaufend geprüft und bewertet wird und es sich bei dem herbeizuführenden sicheren Zustand des Batteriemoduls um einen solchen Zustand handelt, in dem Auswirkungen eines schadhaften Batteriemoduls vermindert werden oder die Wahrscheinlichkeit einer Schädigung des Batteriemoduls verringert wird, wobei die Herbeiführung des sicheren Zustands in Abhängigkeit einer Kenngröße, die auf einen Druckzustand des Batteriemoduls schließen lässt, vollzogen wird.

## Beschreibung

### Feld der Erfindung

Die vorliegende Erfindung bezieht sich auf ein Verfahren und eine Vorrichtung zur Erhöhung der Sicherheit beim Gebrauch von Batteriemodulen gemäß dem Oberbegriff der unabhängigen Patentansprüche.

### Stand der Technik

Aus dem Stand der Technik sind Sicherheitskonzepte für eigensichere Batteriemodule bekannt. Zum Stand der Technik gehören beispielsweise Schmelzsicherungen und Maßnahmen, die zu hohe Spannungen im Bereich der Batteriemodule verhindern oder diesen entgegenwirken. Beispielsweise ist in der DE 102 011 113 798 A1 eine modulare Batterie offenbart, bei der zur Vermeidung von im Zusammenhang mit der Batterie stehenden Gefahren einzelne Serien- und Parallelschaltungen des Batteriemoduls an- und abgeschaltet werden können.

### Offenbarung der Erfindung

Die Erfindung geht aus von einem Verfahren zur Herbeiführung eines sicheren Zustands eines Batteriemoduls eines Fahrzeugs, wobei der aktuelle Zustand des Batteriemoduls fortlaufend geprüft und bewertet wird und es sich bei dem herbeizuführenden sicheren Zustand des Batteriemoduls um einen solchen Zustand handelt, in dem Auswirkungen eines schadhaften Batteriemoduls vermindert werden und/oder die Wahrscheinlichkeit einer Schädigung eines Batteriemoduls verringert wird.

Der Kern der Erfindung besteht darin, dass die Herbeiführung des sicheren Zustands, gemäß der kennzeichnenden Merkmale der unabhängigen Ansprüche, in Abhängigkeit einer Kenngröße, die auf einen Druckzustand des Batteriemoduls schließen lässt, vollzogen wird. Bei dem betrachteten Druckzustand des Batteriemoduls handelt es sich um einen Druck im Inneren des Batteriemoduls.

Hintergrund der Erfindung ist die Erhöhung der Sicherheit im Umgang mit Batteriemodulen und die Verringerung der Wahrscheinlichkeit einer Schädigung eines Batteriemoduls und/oder die Verminderung der Auswirkungen von schadhaften Batteriemodulen auf die Umgebung. Eine in Abhängigkeit einer Kenngröße, die auf einen Druckzustand des Batteriemoduls schließen lässt, vollzogene Herbeiführung des sicheren Zustands des Batteriemoduls führt zu einem sicheren Betrieb des Batteriemoduls im Fall eines Überdrucks im Inneren des Batteriemoduls und zur Überführung des Batteriemoduls in einen sicheren Zustand. Durch die Überführung des Batteriemoduls in einen sicheren Zustand werden etwaige Gefahren, die durch einen Überdruck im Inneren des Batteriemoduls verursacht werden können, weitestgehend vermieden.

Erfindungsgemäß ist zudem eine Steuerung für ein eigensicheres Batteriemodul vorgesehen. Die Steuerung ist zur Herbeiführung eines sicheren Zustands des Batteriemoduls geeignet. Dabei wird der aktuelle Zustand des Batteriemoduls fortlaufend geprüft und bewertet und es handelt sich bei dem herbeizuführenden sicheren Zustand des Batteriemoduls um einen solchen Zustand, in dem Auswirkungen eines schadhaften Batteriemoduls vermindert werden und/oder die Wahrscheinlichkeit der Schädigung eines Batteriemoduls verringert wird. Dabei sind Mittel zur Herbeiführung des sicheren Zustands, insbesondere in Abhängigkeit einer Kenngröße, die auf einen Druckzustand des Batteriemoduls schließen lässt, vorgesehen.

Ferner ist erfindungsgemäß ein eigensicheres Batteriemodul vorgesehen, wobei das eigensichere Batteriemodul gesteuert werden kann.

Weitere vorteilhafte Ausführungsformen der vorliegenden Erfindung sind Gegenstand der Unteransprüche.

Gemäß einer vorteilhaften Ausführungsform der Erfindung, handelt es sich bei der Kenngröße, die auf einen Druckzustand des Batteriemoduls schließen lässt, um einen Druck im Inneren des Batteriemoduls und/oder um einen zeitlichen Verlauf des Drucks im Inneren des Batteriemoduls.

Der Druck im Inneren, sowie der zeitliche Verlauf des Drucks im Inneren, stellen physikalische Zustandsgrößen des Batteriemoduls dar. Die Nutzung dieser Zustandsgrößen führt zu dem Vorteil, sie anhand physikalischer Parameter genau zu bestimmen und quantitativ angegeben zu können.

Gemäß einer weiteren vorzugsweisen Ausgestaltung der Erfindung, wird zur Herbeiführung des sicheren Zustands des Batteriemoduls ein Vergleich der Kenngröße, die auf einen Druckzustand des Batteriemoduls schließen lässt, mit einem Schwellenwert vollzogen. Abhängig von dem Vergleich und in Abhängigkeit des Ladezustands des Batteriemoduls und/oder des Alters des Batteriemoduls wird eine Aktorik (A1, A2), insbesondere eine Vorrichtung zum Legen eines Strombypass oder zur Anwendung einer Entladevorrichtung angesteuert. Dabei wird mit der Aktorik (A1, A2), falls die Kenngröße den Schwellenwert erreicht oder überschreitet, der Strombypass im Bereich des Batteriemoduls aktiviert, sodass das Batteriemodul nicht geladen werden kann und in Abhängigkeit des Ladezustands eine Entladevorrichtung aktiviert und das Batteriemodul entladen, sodass das Batteriemodul schnellstmöglich in einen Zustand weitestgehend vollständiger Entladung überführt wird. Ein beispielhafter Schwellenwert für einen zu hohen Druck im Inneren des Batteriemoduls kann zwischen 2 bar und 8 bar, insbesondere zwischen 3 bar und 7 bar liegen.

Dieses Vorgehen führt zu dem Vorteil eines sicheren Umgangs mit einem Batteriemodul bei dem ein zu hoher Druck im Inneren eingetreten ist: Vor allem die kontrollierte Entladung eines Batteriemoduls, bei dem ein zu hoher Druck im Inneren vorliegt, erhöht die Sicherheit im Umgang mit dem Batteriemodul. Eine kontrollierte Entladung führt zu dem Vorteil, ein Schmelzen von Kabeln, die mit dem Batteriemodul in Kontakt stehen und zum Entladen des Batteriemoduls verwendet werden können, zu verhindern. Die Entladung des Batteriemoduls bewirkt zudem eine Überführung des Batteriemoduls in einen elektrochemisch sicheren Zustand.

Entsprechend einer weiteren vorteilhaften Ausgestaltung der Erfindung wird für den Fall, dass die Kenngröße den Schwellenwert erreicht oder überschreitet und bei Vorliegen eines niedrigen Ladezustands die Entladevorrichtung aktiviert und das Batteriemodul in Abhängigkeit des Drucks im Inneren des Batteriemoduls und/oder der Temperatur im Inneren des Batteriemoduls und/oder der zeitlichen Änderung der Temperatur im Inneren des Batteriemoduls und/oder des Ladezustands des Batteriemoduls entladen. Bei Vorliegen eines hohen Ladezustands hingegen wird eine Schnellentladevorrichtung aktiviert und das Batteriemodul schnellstmöglich entladen. Ein beispielhafter Wert für einen hohen Ladezustand des Batteriemoduls liegt vor, wenn der Ladezustand zwischen 80% und 100% des regulären Ladezustands liegt. Im regulären Betrieb des Batteriemoduls liegt dann eine Spannung von ungefähr N x 4,2 V, wobei N der Anzahl der in einer Serie geschalteten Batteriezellen im Batteriemodul entspricht, zwischen den Anschlüsse des Batteriemoduls an. Ein beispielhafter Wert für einen niedrigen Ladezustand des Batteriemoduls liegt vor, wenn der Ladezustand einen Wert zwischen 40% und 80% des regulären Ladezustands unterschreitet. In diesem Fall liegt dann eine Spannung zwischen 0V und N x 3V, wobei N der Anzahl der in einer Serie geschalteten Batteriezellen im Batteriemodul entspricht, zwischen den Anschlüssen des Batteriemoduls an.

Gemäß einer weiteren vorteilhaften Ausführungsform der Erfindung wird, falls das Batteriemodul nahezu vollständig entladen ist, nach der Entladung die Entladevorrichtung deaktiviert und/oder die Schnellentladevorrichtung deaktiviert; der Strombypass bleibt aktiv. Die bleibende Aktivität des Strombypass führt dazu, dass das defekte Batteriemodul nicht mehr geladen werden kann, aber Ströme beider Polarität über den Strombypass geführt werden können.

Entsprechend einer weiteren vorteilhaften Ausgestaltung der Erfindung ist für das eigensichere Batteriemodul zur Bestimmung des aktuellen Zustands des Batteriemoduls mindestens eine Sensorik (S) zur Erfassung physikalischer Größen des Batteriemoduls vorgesehen.

Vorteilhafterweise wird das erfindungsgemäße Verfahren bzw. die entsprechende Vorrichtung bzw. die Steuerung sowie ein entsprechendes eigensicheres Batteriemodul wenigstens in der Fahrzeugtechnik oder in der Energietechnik verwendet.

### Kurze Beschreibung der Zeichnungen

Im folgenden Abschnitt wird die Erfindung anhand von Ausführungsbeispielen, aus denen sich weitere erfinderische Merkmale ergeben können, auf die die Erfindung aber in ihrem Umfang nicht beschränkt ist, erläutert. Die Ausführungsbeispiele sind in den Zeichnungen dargestellt.

Es zeigt:
- Fig. 1: eine schematische Darstellung eines eigensicheren Batteriemoduls;
- Fig. 2: eine schematische Darstellung des Verfahrens zur Erhöhung der Sicherheit beim Gebrauch eigensicherer Batteriemodule in Abhängigkeit einer Kenngröße, die auf einen Druckzustand des Batteriemoduls schließen lässt,
und
- Fig. 3: ein grundsätzliches Schaltbild eines eigensicheren Batteriemoduls, das zur Herbeiführung eines sicheren Zustands des Batteriemoduls in Abhängigkeit einer Kenngröße, die auf einen Druckzustand des Batteriemoduls schließen lässt, geeignet ist.

### Ausführungsformen der Erfindung

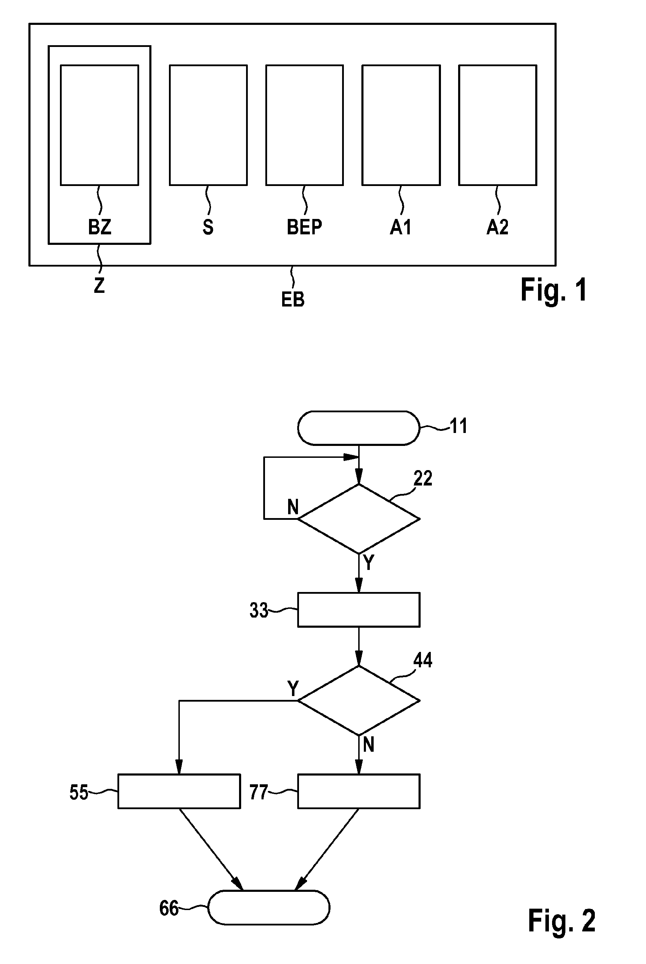

In Fig. 1 ist ein eigensicheres Batteriemodul EB schematisch dargestellt. Bei einem eigensicheren Batteriemodul EB wird der aktuelle Zustand des Batteriemoduls fortlaufend geprüft und bewertet und es wird ein sicherer Zustand des Batteriemoduls herbeigeführt. Bei dem herbeizuführenden sicheren Zustand des Batteriemoduls handelt es sich um einen solchen Zustand, in dem Auswirkungen eines schadhaften Batteriemoduls vermindert werden und/oder die Wahrscheinlichkeit einer Schädigung eines Batteriemoduls verringert wird. Zu diesem Zweck verfügt das eigensichere Batteriemodul EB beispielsweise über ein geeignetes Sensor- und Aktorkonzept zur Realisierung der Eigensicherheit.

Das eigensichere Batteriemodul EB enthält mindestens ein Zellmodul Z, das mindestens eine Batteriezelle BZ enthält. Die mindestens eine Batteriezelle BZ setzt sich aus mechanischen Komponenten und wenigstens einer elektrochemischen Komponente zusammen. Die elektrochemische Komponente wird auch als Chemiesystem des eigensicheren Batteriemoduls EB bezeichnet. Beispielhaft handelt es sich bei der mindestens einen Batteriezelle BZ um eine Lithium-Ionen-Batteriezelle. Vorzugsweise ist weiterhin eine Sensorik S enthalten, mit der zumindest die Spannung des eigensicheren Batteriemoduls EB oder der Strom, mit dem das eigensichere Batteriemoduls EB entladen oder beladen werden kann, ermittelt werden kann. Vorzugsweise ist ferner wenigstens eine Komponente BEP zur Batteriezustandserkennung oder zur Voraussage von Batteriezuständen des eigensicheren Batteriemoduls EB oder zur Erkennung oder zur Voraussage von Batteriezustandsgrößen des eigensicheren Batteriemoduls EB enthalten. Vorzugsweise ist ferner eine Aktorik A1 zur Herbeiführung eines sicheren Zustands des eigensicheren Batteriemoduls EB enthalten; mit der Aktorik A1 kann vorzugsweise wenigstens ein nicht dargestellter Strombypass zwischen elektrischen Anschlüssen des eigensicheren Batteriemoduls EB geschaltet oder eine nicht dargestellte Entladevorrichtung, insbesondere ein Discharge Device, oder eine nicht dargestellte Schnellentladevorrichtung, insbesondere ein Ultrafast Discharge Device, im Bereich des eigensicheren Batteriemoduls EB zur Anwendung gebracht werden. Zum Zweck der Anwendung, wird die Entladevorrichtung oder die Schnellentladevorrichtung mit den Anschlüssen des eigensicheren Batteriemoduls EB elektrisch verbunden.

Wird der Strombypass zwischen den elektrischen Anschlüssen des eigensicheren Batteriemoduls EB geschaltet, kann zwischen den elektrischen Anschlüssen des eigensicheren Batteriemoduls EB ein elektrischer Strom fließen, ohne dass dieser Strom durch die elektrochemische Komponente der mindestens einen Batteriezelle BZ des eigensicheren Batteriemoduls EB fließt. Der Strombypass kann auch zwischen den Anschlüssen der mindestens einen Batteriezelle BZ geschaltet werden. Vorzugsweise ist ferner eine Aktorik A2 enthalten; mit der Aktorik A2 kann die Ausgangsspannung des eigensicheren Batteriemoduls EB zumindest gesteuert oder in ihrer Höhe variiert werden.

In Figur 2 ist ein Verfahren zur Erhöhung der Sicherheit beim Gebrauch von eigensicheren Batteriemodulen EB schematisch dargestellt. Durch Verfahrensschritt 11 wird das Verfahren eingeleitet. In einem darauf folgenden Schwellenwertvergleichsschritt 22 wird geprüft, ob eine Kenngröße einen Schwellenwert erreicht oder überschreitet.
Bei der Kenngröße und dem Schwellenwert handelt es sich vorzugsweise um den Druck im Inneren des eigensicheren Batteriemoduls EB oder um die zeitliche Änderung des Drucks im Inneren des eigensicheren Batteriemoduls EB. Wenn die Kenngröße den Schwellenwert weder erreicht noch überschreitet, wird Schwellenwertvergleichsschritt 22 wiederholt. Wenn die Kenngröße den Schwellenwert erreicht oder überschreitet, wird in einem darauf folgenden Strombypassschritt 33 ein Strombypass im Bereich des eigensicheren Batteriemoduls EB aktiviert, sodass das eigensichere Batteriemodul EB nicht unkontrolliert entladen wird. Anschließend wird in Ladezustandprüfungsschritt 44 geprüft, ob der Ladezustand des eigensicheren Batteriemoduls EB zu hoch ist. Wenn der Ladezustand des eigensicheren Batteriemoduls EB zu hoch ist, wird in Schnellentladevorrichtungsschritt 55 eine Schnellentladevorrichtung, insbesondere ein Ultrafast Discharge Device, aktiviert, sodass das eigensichere Batteriemodul EB weitestgehend und schnellstmöglich entladen wird. Im darauf folgenden Abschlussschritt 66 wird das Verfahren abgeschlossen.

Wenn der Ladezustand des eigensicheren Batteriemoduls EB hingegen nicht zu hoch ist, wird in Entladevorrichtungsschritt 77 eine Entladevorrichtung, insbesondere ein Discharge Device, aktiviert, sodass das eigensichere Batteriemodul EB weitestgehend entladen wird. Im darauf folgenden Abschlussschritt 66 wird das Verfahren abgeschlossen.

Vorzugsweise werden sämtliche in den oben beschriebenen Verfahrensschritten aufgeführten Zustandsgrößen des eigensicheren Batteriemoduls EB beispielsweise mit Hilfe der Sensorik S ermittelt. Die Prüfung und Bewertung der Zustandsgrößen wird dabei vorzugsweise durch die Komponente BEP zur Batteriezustandserkennung durchgeführt. Die in den Verfahrensschritten durchgeführten aktorischen Vorgänge werden beispielsweise mittels der Aktoren A1, A2 vorgenommen.

Alternativ zu der Sensorik S, die Teil des eigensicheren Batteriemoduls EB ist, können weitere, außerhalb des eigensicheren Batteriemoduls EB bestehende Sensoren zur Ermittlung von Zustandsgrößen des eigensicheren Batteriemoduls EB verwendet werden. Beispielsweise kann es sich dabei um Sensoren handeln, die zur Ausstattung eines Fahrzeugs gehören, in dem das eigensichere Batteriemodul EB verwendet wird. Beispielhaft kann es sich dabei um Sensoren zur Bestimmung physikalischer Größen wie Druck oder Temperatur handeln.

Die Verwendung eines eigensicheren Batteriemoduls EB ist in der Fahrzeugtechnik und auch in der Energietechnik möglich.

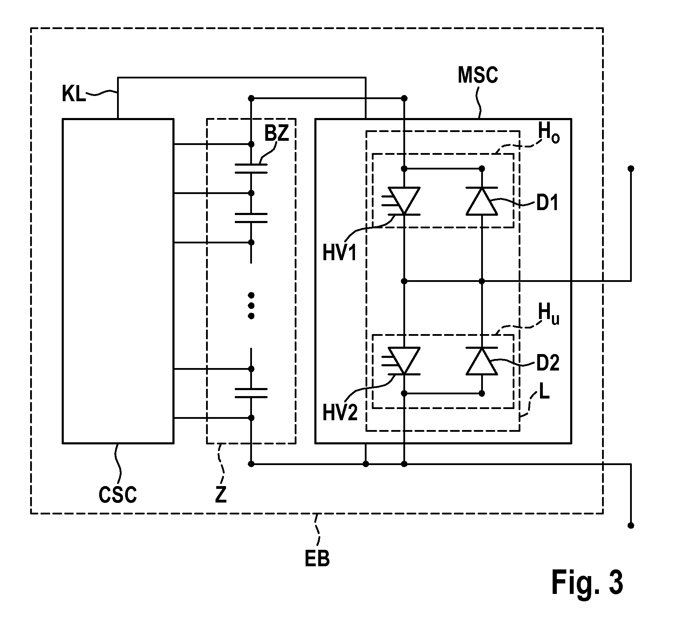

In Fig. 3 ist ein grundsätzliches Schaltbild eines eigensicheren Batteriemoduls E B dargestellt.

Im grundsätzlichen Schaltbild sind ein Zellmodul Z, eine Zellüberwachungselektronik CSC und eine Modulüberwachungselektronik MSC dargestellt.

Das Zellmodul Z enthält mindestens eine Batteriezelle BZ. Beispielhaft handelt es sich bei der mindestens einen Batteriezelle BZ um eine Lithium-lonen-Batteriezelle.

Die Zellüberwachungselektronik CSC enthält die in der Beschreibung zu Figur 1 genannte Sensorik S zur Erfassung eines Zustands der mindestens einen Batteriezelle BZ. Die Zellüberwachungselektronik CSC dient der Überwachung der mindestens einen Batteriezelle BZ innerhalb des Zellmoduls Z.

Die Modulüberwachungselektronik MSC kommuniziert mit der Zellüberwachungselektronik CSC. Die Kommunikation zwischen Zellüberwachungselektronik CSC und Modulüberwachungselektronik MSC kann drahtlos oder drahtgebunden über eine Kommunikationsleitung KL erfolgen. Im Rahmen der Kommunikation zwischen der Modulüberwachungselektronik MSC und der Zellüberwachungselektronik CSC werden Daten über mindestens eine Batteriezelle BZ übertragen. Ferner verfügt die Modulüberwachungselektronik MSC über die Sensorik S zur Überwachung des Zellmoduls Z.

In Abhängigkeit des Zustands der mindestens einen Batteriezelle BZ oder des Zellmoduls Z kann die Modulüberwachungselektronik MSC agieren. Die Modulüberwachungselektronik MSC enthält zu diesem Zweck wenigstens zwei ein- und ausschaltbare Halbleiterventile HV1 und HV2 und zwei Dioden D1 und D2. Je ein ausschaltbares Halbleiterventil und eine Diode bilden eine Halbbrückenanordnung. Eine obere Halbbrückenanordnung, enthaltend HV1 Und D1, wird in der Zeichnung mit Hₒ, eine untere Halbbrückenanordnung, enthaltend HV2 und D2, mit Hᵤ bezeichnet. Die obere Halbbrückenanordnung und die untere Halbbrückenanordnung bilden einen steuerbaren Leistungsschalter L.

Im Normalfall, beispielsweise im regulären Betriebszustand eines eigensicheren Batteriemoduls EB, ist die obere Halbbrückenanordnung Hₒ eingeschaltet, die untere Halbbrückenanordnung Hᵤ ist ausgeschaltet. In diesem Zustand führt die Zellüberwachungselektronik CSC einen Ladungsausgleich zwischen mindestens zwei Batteriezellen BZ durch.

Erkennt die Modulüberwachungselektronik MSC anhand einer Kenngröße, die auf einen Druckzustand des eigensicheren Batteriemoduls EB schließen lässt, dass ein Strombypass im Bereich des eigensicheren Batteriemoduls EB gelegt werden muss, wird die obere Halbbrückenanordnung Hₒ aus- und die untere Halbbrückenanordnung Hᵤ eingeschaltet. Der Strom, der durch das Zellmodul Z fließt, fließt dann über die untere Halbbrückenanordnung Hᵤ.

Erkennt die Modulüberwachungselektronik MSC anhand einer Kenngröße, die auf einen Druckzustand des eigensicheren Batteriemoduls EB schließen lässt, dass eine Entladevorrichtung oder eine Schnellentladevorrichtung im Bereich des eigensicheren Batteriemoduls EB zur Anwendung gebracht werden muss, wird die obere Halbbrückenanordnung Hₒ aus- und die untere Halbbrückenanordnung Hᵤ eingeschaltet. Der Strom, der durch das Zellmodul Z fließt, fließt dann über die untere Halbbrückenanordnung Hᵤ.

Neben der in Fig. 3 dargestellten Überwachung der Batteriezellen mittels einer Zellüberwachungselektronik, ist eine batteriezelleneigene Überwachung durch je eine, der mindestens einen Batteriezelle BZ zugeordneten, Zellüberwachungselektronik CSC möglich. Dazu wird jeder Batteriezelle BZ eine eigene Unter-Zellüberwachungselektronik zugeordnet. Diese Unter-Zellüberwachungselektroniken kommunizieren mit einer Haupt-Zellüberwachungselektronik. Die Haupt-Zellüberwachungselektronik kommuniziert mit der Modulüberwachungselektronik MSC, die unter anderem in Abhängigkeit von der der Haupt-Zellüberwachungselektronik kommunizierten Information agiert.

## Patentansprüche

1. Verfahren zur Herbeiführung eines sicheren Zustands eines Batteriemoduls, wobei der aktuelle Zustand des Batteriemoduls fortlaufend geprüft und bewertet wird und es sich bei dem herbeizuführenden sicheren Zustand des Batteriemoduls um einen solchen Zustand handelt, in dem Auswirkungen eines schadhaften Batteriemoduls vermindert werden und/oder die Wahrscheinlichkeit einer Schädigung des Batteriemoduls verringert wird,
**dadurch gekennzeichnet, dass**
die Herbeiführung des sicheren Zustands in Abhängigkeit einer Kenngröße, die auf einen Druckzustand des Batteriemoduls schließen lässt, vollzogen wird.

2. Verfahren nach Anspruch 1,
**dadurch gekennzeichnet, dass**
es sich bei der Kenngröße, die auf einen Druckzustand des Batteriemoduls schließen lässt,
- um einen Druck im Inneren des Batteriemoduls und/oder
- um eine zeitliche Änderung des Drucks in Inneren des Batteriemoduls handelt.

3. Verfahren nach einem der vorhergehenden Ansprüche,
**dadurch gekennzeichnet, dass,**
zur Herbeiführung des sicheren Zustands des Batteriemoduls ein Vergleich der Kenngröße mit einem Schwellenwert vollzogen wird und in Abhängigkeit des Ladezustands des Batteriemoduls und/oder dem Druck im Inneren des Batteriemoduls und/oder dem Alter des Batteriemoduls für den Fall, dass die Kenngröße den Schwellenwert erreicht oder überschreitet, wobei ein beispielhafter Schwellenwert für einen zu hohen Druck im Inneren des Batteriemoduls kann zwischen 2 bar und 8 bar, insbesondere zwischen 3 bar und 7 bar liegen kann,
- ein Strombypass aktiviert und das Batteriemodul nicht geladen wird und
- in Abhängigkeit des Ladezustands eine Entladevorrichtung aktiviert und das Batteriemodul entladen wird, sodass das Batteriemodul schnellstmöglich in einen Zustand weitestgehend vollständiger Entladung überführt wird.

4. Verfahren nach Anspruch 3,
**dadurch gekennzeichnet, dass,**
für den Fall, dass die Kenngröße den Schwellenwert erreicht oder überschreitet und bei Vorliegen eines niedrigen Ladezustands die Entladevorrichtung aktiviert und das Batteriemodul in Abhängigkeit des Drucks im Inneren des Batteriemoduls und/oder der Temperatur im Inneren des Batteriemoduls und/oder der zeitlichen Änderung der Temperatur im Inneren des Batteriemoduls und/oder des Ladezustands des Batteriemoduls entladen wird und, dass bei Vorliegen eines hohen Ladezustands eine Schnellentladevorrichtung aktiviert und das Batteriemodul schnellstmöglich entladen wird, wobei beispielhaft ein hoher Ladezustand des Batteriemoduls vorliegt, wenn der Ladezustand zwischen 80% und 100% des regulären Ladezustands liegt und ein niedriger Ladezustand des Batteriemoduls vorliegt, wenn der Ladezustand einen Wert zwischen 40% und 80% des regulären Ladezustands unterschreitet.

5. Verfahren nach Anspruch 3 oder 4,
**dadurch gekennzeichnet, dass,**
falls das Batteriemoduls vollständig entladen ist, die Entladevorrichtung nach Abschluss der Entladung und in Abhängigkeit des Drucks im Inneren des Batteriemoduls deaktiviert wird.

6. Steuerung für ein eigensicheres Batteriemodul (EB), geeignet zur Herbeiführung eines sicheren Zustands des Batteriemoduls, wobei der aktuelle Zustand des Batteriemoduls fortlaufend geprüft und bewertet wird und es sich bei dem herbeizuführenden sicheren Zustand des Batteriemoduls um einen solchen Zustand handelt, in dem Auswirkungen eines schadhaften Batteriemoduls vermindert werden und/oder die Wahrscheinlichkeit einer Schädigung des Batteriemoduls verringert wird,
**dadurch gekennzeichnet, dass**
Mittel zur Herbeiführung des sicheren Zustands in Abhängigkeit einer Kenngröße, die auf einen Druckzustand des Batteriemoduls schließen lässt, vorgesehen sind, insbesondere unter Durchführung eines Verfahrens nach einem der vorhergehenden Ansprüche.

7. Eigensicheres Batteriemodul (EB),
**dadurch gekennzeichnet, dass**
eine Steuerung nach Anspruch 6 vorgesehen ist.

8. Eigensicheres Batteriemodul (EB) nach Anspruch 7,
**dadurch gekennzeichnet, dass**
zur Bestimmung des aktuellen Zustands des Batteriemoduls mindestens eine Sensorik (S) zur Erfassung physikalischer Größen des Batteriemoduls, vorgesehen ist.

9. Eigensicheres Batteriemodul (EB) nach Anspruch 7,
**dadurch gekennzeichnet, dass**
zur Herbeiführung des sicheren Zustands des Batteriemoduls mindestens eine Vorrichtung zum Legen eines Strombypass und eine Entladevorrichtung, insbesondere ein Discharge Device, und eine Schnellentladevorrichtung, insbesondere ein Ultrafast Discharge Device, vorgesehen sind.

10. Verwendung eines Verfahrens gemäß einem der Ansprüche 1 bis 5 und/oder einer Vorrichtung gemäß einem der Ansprüche 6 bis 9 und/oder einer Steuerung gemäß Anspruch 6 und/oder eines eigensicheren Batteriemoduls (EB) gemäß einem der Ansprüche 7 bis 9 in der Fahrzeugtechnik und/oder in der Energietechnik.
